# EUROPEAN PATENT APPLICATION

(11) **EP 4 424 148 A1**
(43) Date of publication of application: **04.09.2024**
(21) Application number: 21962645.4
(22) Date of filing: 23.12.2021
(51) Int. Cl.: A01G 31/06, A01G 29/00, A01G 9/24, A01C 23/00, G01N 33/18, G01F 23/00, B05B 17/06, G06Q 50/02

(54) **PLANT CULTIVATION APPARATUS**

(30) Priority: 27.10.2021 KR 20210144651
(71) Applicant: GSFsystem Corp., Changwon-si, Gyeongsangnam-do 51410 (KR)
(72) Inventor: SEO, Minseong, Changwon-si, Gyeongsangnam-do 51588 (KR)
(74) Representative: van Trier, Norbertus Henricus Gerardus
(86) International application number: PCT/KR2021/019724
(87) International publication number: WO 2023/075022

(57) **Abstract**

A plant cultivation apparatus according to several embodiments of the present disclosure includes a plant arrangement unit on which a plant is disposed, a moisture supply unit connected to the plant arrangement unit and configured to spray a liquid to the plant, and a liquid supply unit connected to the moisture supply unit and configured to supply the liquid to the moisture supply unit.

## Description

### CROSS-REFERENCE TO RELATED APPLICATIONS

This application claims priority to and the benefit of Korean Patent Application No. 10-2021-0144651 filed in the Korean Intellectual Property Office on October 27, 2021, the entire contents of which are incorporated herein by reference.

### TECHNICAL FIELD

The present disclosure relates to a plant cultivation apparatus, and more particularly, to a plant cultivation apparatus configured to spray a liquid.

### BACKGROUND ART

In general, a hydroponic cultivation technology has been known as a technology for cultivating crops or ornamental plants. The hydroponic cultivation may arbitrarily adjust components of a liquid (e.g., a nutrient solution) to be supplied to crops without requiring soil such as culture soil and may hygienically cultivate the crops. Therefore, the hydroponic cultivation attracts attention as a main indoor agricultural technology. The use of the hydroponic cultivation is further increasing because of a decrease in agricultural lands caused by industrial development, an increase in consumer needs for safe food to cope with the development and increase in use of pesticides, a continuous increase in demands for non-polluted vegetables for four seasons, and an increase in pattern for consuming a small amount of items because of a decrease in number of members of a family caused by a tendency toward a nuclear family and aging.

However, in the case of hydroponic cultivation, because at least a part of a root is immersed in a liquid, the amount of oxygen supplied to the root is small. Therefore, the hydroponic cultivation is not suitable for other plants vulnerable to the above-mentioned condition, which causes a problem in that the type of cultivable plants is limited.

Because the liquid is suitable for algae or bacteria to grow, there is a problem in that a separate action is required to prevent the growth of algae or bacteria. Further, because this technology requires the amount of liquid larger than the amount of liquid required for the plants, there is a problem in that the liquid is wasted.

### [Document of Related Art]

### [Patent Document]

Korean Patent No. 10-1802874 (registered on November 23, 2017)

### SUMMARY OF THE INVENTION

The present disclosure has been made in an effort to provide a plant cultivation apparatus configured to spray a liquid.

Technical problems of the present disclosure are not limited to the aforementioned technical problems, and other technical problems, which are not mentioned above, may be clearly understood by those skilled in the art from the following descriptions.

Several embodiments of the present disclosure provide a plant cultivation apparatus including: a plant arrangement unit on which a plant is disposed; a moisture supply unit connected to the plant arrangement unit and configured to spray a liquid to the plant; and a liquid supply unit connected to the moisture supply unit and configured to supply the liquid to the moisture supply unit.

Alternatively, the moisture supply unit may include: a liquid container connected to the liquid supply unit and configured to accommodate the amount of liquid equal to or smaller than a reference amount of liquid; a vibrator provided at a lower side of the liquid container and configured to atomize the liquid by applying vibration to the liquid; a discharge port formed at an upper side of the liquid container and configured to discharge the atomized liquid to the plant arrangement unit; an inlet port formed at the upper side of the liquid container and configured to suck the atomized liquid discharged to the plant arrangement unit through the discharge port; and a circulation device provided at the upper side of the liquid container so as to correspond to the inlet port and configured to circulate the atomized liquid.

Alternatively, the liquid supply unit may include: a liquid storage unit configured to store the liquid and including a pump configured to provide power for supplying the liquid to the moisture supply unit; a liquid supply tube provided in the form of a hollow tube which one side is connected to the liquid storage unit, and the other side connected to the moisture supply unit, such that the liquid stored in the liquid storage unit moves to the moisture supply unit; a first drain tube provided in the form of a hollow tube which one side is connected to the moisture supply unit, and the other side is connected to the liquid storage unit, such that the liquid accommodated in the moisture supply unit moves to the liquid storage unit; and a second drain tube provided in the form of a hollow tube which one side is connected to the plant arrangement unit, and the other side is connected to the liquid storage unit, such that the liquid condensed in the plant arrangement unit moves to the liquid storage unit.

Alternatively, one side of the first drain tube may be connected to a preset position in the moisture supply unit, and the preset position may be a position set so that at least a part of the liquid accommodated in the moisture supply unit moves to the liquid storage unit when the amount of liquid accommodated in the moisture supply unit exceeds a reference amount of liquid.

Alternatively, the liquid storage unit may further include a level sensor module configured to detect a level of the stored liquid, and the plant cultivation apparatus may further include a control unit configured to determine whether to transmit a danger signal to an external device based on the level when the level is detected by the level sensor module.

Alternatively, the plant cultivation apparatus may further include: a network unit configured to be controlled by the control unit, in which the control unit transmits the danger signal including information on the level to the external device through the network unit when the control unit recognizes that the level is equal to or lower than a preset height.

Alternatively, the liquid storage unit may include a dissolved oxygen measurement sensor module configured to measure the amount of dissolved oxygen in the stored liquid.

Alternatively, the plant cultivation apparatus may further include: an oxygen supply unit connected to the liquid supply unit and configured to supply oxygen to the liquid supply unit; and a control unit configured to determine whether to supply the oxygen through the oxygen supply unit based on the amount of dissolved oxygen when the amount of dissolved oxygen is measured by the dissolved oxygen measurement sensor module.

Alternatively, the control unit may control the oxygen supply unit to supply the oxygen when the control unit recognizes that the amount of dissolved oxygen is equal to or smaller than a reference amount of dissolved oxygen.

Alternatively, the plant cultivation apparatus may further include: a lighting unit including at least one light configured to emit light toward the plant; and a control unit configured to control at least one of a light emission angle and intensity of light of the at least one light based on an arrangement of the plant.

The present disclosure may provide the plant cultivation apparatus configured to spray a liquid, thereby reducing the use of the liquid.

The effects obtained by the present disclosure are not limited to the aforementioned effects, and other effects, which are not mentioned above, will be clearly understood by those skilled in the art from the following description.

### BRIEF DESCRIPTION OF THE DRAWINGS

Various aspects will be described with reference to the drawings, in which similar reference numerals are used to refer to similar components. In the following examples, for purposes of explanation, multiple specific details are set forth in order to provide a thorough understanding of one or more aspects. However, it will be apparent that such aspect(s) may be practiced without the specific details.
FIG. 1 is a view illustrating a plant cultivation system including a plant cultivation apparatus according to several embodiments of the present disclosure.
FIG. 2 is a front view of a part of the plant cultivation apparatus according to the several embodiments of the present disclosure.
FIG. 3 is a side view of a part of the plant cultivation apparatus according to the several embodiments of the present disclosure.
FIG. 4 is a top plan view of a part of the plant cultivation apparatus according to the several embodiments of the present disclosure.
FIG. 5 is a front view of a moisture supply unit of the plant cultivation apparatus according to the several embodiments of the present disclosure.
FIG. 6 is a side view of the moisture supply unit of the plant cultivation apparatus according to the several embodiments of the present disclosure.
FIG. 7 is a top plan view of the moisture supply unit of the plant cultivation apparatus according to the several embodiments of the present disclosure.

### DETAILED DESCRIPTION

Various exemplary embodiments and/or various aspects will be disclosed with reference to the drawings. In the following descriptions, for explanation, multiple specific details are disclosed in order to provide overall understandings of one or more aspects. However, it will also be appreciated by those skilled in the art that this aspect(s) may be practiced without these specific details. The following descriptions and the accompanying drawings are provided for disclosing specific exemplary aspects of the one or more aspects in detail. However, these aspects are exemplary. Thus, some of the various methods in the principles of the various aspects may be used, and the descriptions are intended to include all such aspects and their equivalents. Specifically, "embodiment", "example", "aspect", "exemplary embodiment" and the like used in this specification may not be construed as any aspect or design described being better or more advantageous than other aspects or designs.

Hereinafter, the same or similar constituent elements are assigned with the same reference numerals regardless of reference numerals, and the repetitive description thereof will be omitted. In addition, in the description of the embodiment disclosed in the present specification, the specific descriptions of publicly known related technologies will be omitted when it is determined that the specific descriptions may obscure the subject matter of the embodiment disclosed in the present specification. In addition, the accompanying drawings are provided only to allow those skilled in the art to easily understand the exemplary embodiments disclosed in the present specification, and the technical spirit disclosed in the present specification is not limited by the accompanying drawings.

Unless otherwise defined, all terms (including technical and scientific terms) used in the present specification may be used as the meaning which may be commonly understood by the person with ordinary skill in the art, to which the present disclosure belongs. In addition, terms defined in a generally used dictionary shall not be construed in ideal or excessively formal meanings unless they are clearly and specially defined in the present specification.

The term "or" is intended to mean not an exclusive "or" but an inclusive "or". That is, unless specified or clear in context, "X uses A or B" is intended to mean one of the natural implicit substitutions. That is, "X uses A or B" can be applied to any of the cases where X uses A, X uses B, or X uses both A and B. Moreover, it is to be understood that the term "and/or" used in this specification refers to and includes all possible combinations of one or more of the listed related items.

It is to be understood that the terms "comprise (include)" and/or "comprising (including)" mean that the feature and/or a component is provided, but the presence or addition of one or more other features, other components and/or groups thereof are not excluded. In addition, unless specified or clear in the context of indicating a singular form, the singular in this specification and claims should generally be construed to mean "one or more".

"At least one of A and B" should be interpreted as meaning a case in which "only A is included", a case in which "only B is included", and a case in which "A and B are combined".

When one constituent element is described as being "connected" or "coupled" to another constituent element, it should be understood that one constituent element can be connected or coupled directly to another constituent element, and an intervening constituent element can also be present between the constituent elements. When one constituent element is described as being "connected directly to" or "coupled directly to" another constituent element, it should be understood that no intervening constituent element is present between the constituent elements.

The suffixes "module" and "unit" used to describe some constituent elements in the following description are used together or interchangeably in order to facilitate the description, but the suffixes themselves do not have distinguishable meanings or functions.

Objects and effects of the present disclosure and technical constituent elements for achieving the objects and effects will be clear with reference to the exemplary embodiments described in detail below together with the accompanying drawings. In addition, in the description of the present disclosure, the specific descriptions of publicly known functions or configurations will be omitted when it is determined that the specific descriptions may unnecessarily obscure the subject matter of the present disclosure. In addition, the terms used herein are defined considering the functions in the present disclosure and may vary depending on the intention or usual practice of a user or an operator.

However, the present disclosure is not limited to the exemplary embodiments disclosed herein but will be implemented in various forms. The exemplary embodiments of the present disclosure are provided so that the present disclosure is completely disclosed, and a person with ordinary skill in the art can fully understand the scope of the present disclosure. The present disclosure will be defined only by the scope of the appended claims. Therefore, the definition of the present disclosure should be made based on the entire contents of the present specification.

A plant cultivation apparatus according to the several embodiments of the present disclosure sprays a liquid, thereby reducing the use of the liquid in comparison with the hydroponic cultivation method. However, the present disclosure is not limited thereto.

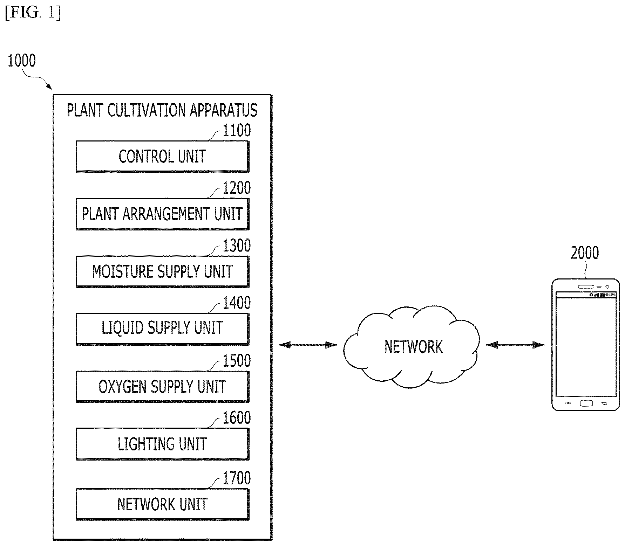

FIG. 1 is a view illustrating a plant cultivation system including a plant cultivation apparatus according to several embodiments of the present disclosure.

Referring to FIG. 1, the plant cultivation system may include a plant cultivation apparatus 1000, an external device 2000, and a network. However, the above-mentioned constituent elements are not essential to implement the plant cultivation system. The plant cultivation system may have the constituent elements larger or smaller in number than the constituent elements listed above.

First, the plant cultivation apparatus 1000 may include a control unit 1100, a plant arrangement unit 1200, a moisture supply unit 1300, a liquid supply unit 1400, an oxygen supply unit 1500, a lighting unit 1600, and a network unit 1700.

Typically, the control unit 1100 may process an overall operation of the plant cultivation apparatus 1000. The control unit 1100 may process signals, data, and information inputted or outputted through the plant cultivation apparatus 1000 or execute an application program stored in a storage unit. In this case, the storage unit may store information on the growth and development of various types of plants as a database. For example, the storage unit may store information such as the amount of liquid to be supplied for each plant, the number of times the liquid is supplied, and a supply timing as the database. In this case, the control unit 1100 may provide the liquid to the plants by controlling the constituent elements based on information on the growth and development of various types of plants stored in the storage unit.

Specifically, the control unit 1100 may perform an operation of cultivating the plants by controlling the plant arrangement unit 1200, the moisture supply unit 1300, the liquid supply unit 1400, the oxygen supply unit 1500, the lighting unit 1600, and the network unit 1700. For example, the control unit 1100 may supply the liquid to the plant arrangement unit 1200 through the moisture supply unit 1300. The liquid may contain a nutrient solution having components required for the growth and development of the plants. Therefore, the plant may be supplied with the liquid required for the growth and development.

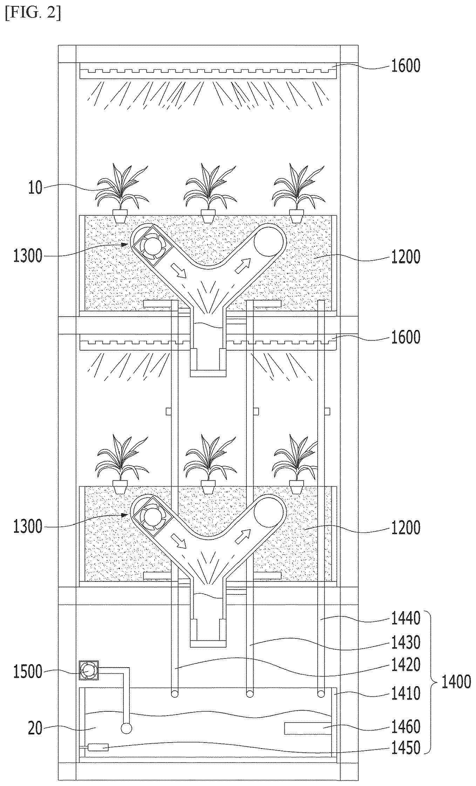

Hereinafter, a part of the plant cultivation apparatus 1000 controlled by the control unit 1100 will be described below with reference to FIGS. 2 to 7.

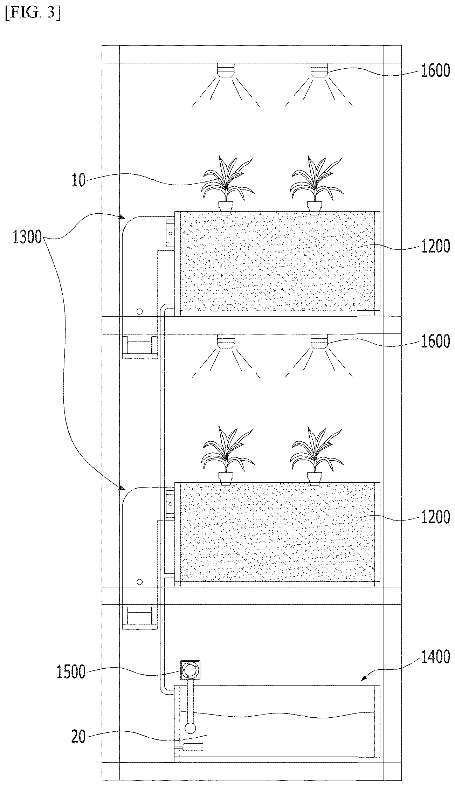

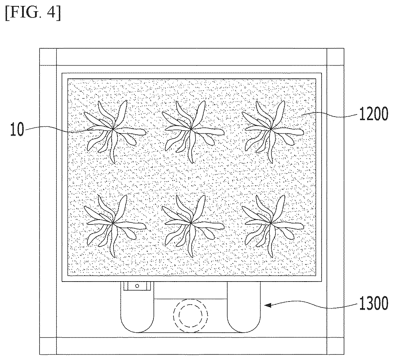

FIG. 2 is a front view of a part of the plant cultivation apparatus according to the several embodiments of the present disclosure. FIG. 3 is a side view of a part of the plant cultivation apparatus according to the several embodiments of the present disclosure. FIG. 4 is a top plan view of a part of the plant cultivation apparatus according to the several embodiments of the present disclosure.

Referring to FIGS. 2 to 4, the plant arrangement unit 1200 is formed in a hexahedral shape having a vacant space with a predetermined depth (e.g., 10 cm). At least one plant 10 may be disposed on an upper portion of the plant arrangement unit 1200. Therefore, a root portion of the at least one plant 10 may be positioned in the vacant space of the plant arrangement unit 1200. Further, the plant arrangement units 1200 may be respectively positioned at upper and middle portions of an entire cabinet.

The moisture supply unit 1300 may be connected to the plant arrangement unit 1200 and spray the liquid to the at least one plant 10. Specifically, the moisture supply unit 1300 may be provided in the vacant space of the plant arrangement unit 1200 and spray the liquid to the root portion of the at least one plant 10. Therefore, the moisture supply unit 1300 supplies the liquid in the form of moisture, such that the plants may be cultivated by the minimum amount of liquid, and costs required to supply the nutrient solution are reduced. Further, the moisture supply unit 1300 may supply a sufficient amount of oxygen to the vacant space of the plant arrangement unit 1200, i.e., the root of the plant exposed to the air. Therefore, the plants may be very quickly grown and developed in comparison with other hydroponic cultivation methods.

According to the several embodiments of the present disclosure, the moisture supply unit 1300 may be provided as a plurality of moisture supply units 1300 that may be respectively positioned in the plant arrangement units 1200. The moisture supply units 1300 may be connected to the liquid supply units 1400, respectively, or to all the liquid supply units 1400 and supplied with the liquid from the respective liquid supply units 1400 or from all the liquid supply units 1400.

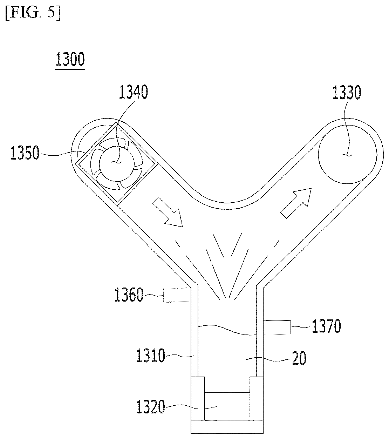

Meanwhile, a specific description of the moisture supply unit 1300 will be described below with reference to FIGS. 5 to 7.

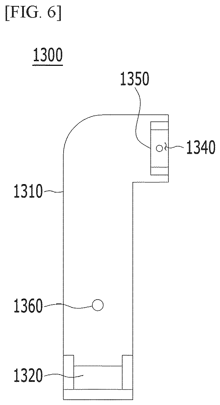

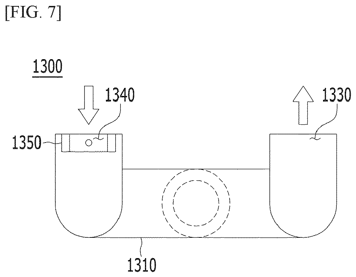

FIG. 5 is a front view of a moisture supply unit of the plant cultivation apparatus according to the several embodiments of the present disclosure. FIG. 6 is a side view of the moisture supply unit of the plant cultivation apparatus according to the several embodiments of the present disclosure. FIG. 7 is a top plan view of the moisture supply unit of the plant cultivation apparatus according to the several embodiments of the present disclosure.

Referring to FIGS. 5 to 7, the moisture supply unit 1300 may include a liquid container 1310, a vibrator 1320, a discharge port 1330, an inlet port 1340, a circulation device 1350, a liquid supply tube connection part 1360, and a first drain tube connection part 1370. However, the constituent elements are not essential to implement the moisture supply unit 1300. The moisture supply unit 1300 may have the constituent elements larger or smaller in number than the constituent elements listed above.

The liquid container 1310 may accommodate the liquid 20 and be connected to the liquid supply unit 1400. Specifically, the liquid container 1310 may accommodate the amount of liquid 20 equal to or smaller than a reference amount of liquid. The reference amount of liquid may be set so that a level of the liquid 20 is lower than a position at which the first drain tube connection part 1370 is formed. However, the present disclosure is not limited thereto. The reference amount of liquid may be set differently depending on the amount of liquid required to be sprayed in accordance with the situation.

The liquid container 1310 may be formed in a Y shape, and the liquid 20 may be accommodated below the Y shape. However, the shape of the liquid container 1310 is not limited thereto, and the liquid container 1310 may be formed in various shapes.

The vibrator 1320 may be provided at a lower side of the liquid container 1310 and atomize the liquid 20 by applying vibration to the liquid 20. Specifically, the vibrator 1320 may be separated from the portion of the liquid container 1310 that accommodates the liquid 20. The vibrator 1320 may be provided below the portion of the liquid container 1310 that accommodates the liquid 20, and the vibrator 1320 may apply vibration to the liquid 20. However, the position of the vibrator 1320 is not limited thereto, and the vibrator 1320 may be provided at a position at which the vibrator 1320 may apply vibration to the liquid 20.

Meanwhile, a frequency, a vibration time, and the like of the vibrator 1320 may be controlled by the control unit 1100. That is, the control unit 1100 may control the amount of atomized liquid, the time for which the liquid is atomized, and the like by controlling a frequency, a vibration time, and the like of the vibrator 1320. Therefore, the control unit 1100 may control the vibrator 1320 to prevent the excessive amount of atomized liquid from being discharged to the plant arrangement unit 1200. According to another embodiment of the present disclosure, the vibrator 1320 may include a timer, and the vibrator 1320 may be operated for a preset time by the timer.

The discharge port 1330 may be formed at an upper side of the liquid container 1310 and discharge the atomized liquid to the plant arrangement unit 1200. Specifically, the discharge port 1330 may be formed at a right upper side of the liquid container 1310, such that the liquid atomized by the vibrator 1320 may be discharged to the plant arrangement unit 1200.

Meanwhile, a discharge port switching unit may be provided to correspond to the discharge port 1330. Therefore, the control unit 1100 may control the discharge port switching unit and adjust the amount of atomized liquid to be discharged to the plant arrangement unit 1200 through the discharge port 1330 or the time for which the atomized liquid is discharged to the plant arrangement unit 1200 through the discharge port 1330.

The inlet port 1340 may be formed at an upper side of the liquid container 1310 and suck the atomized liquid discharged to the plant arrangement unit 1200 through the discharge port 1330. Specifically, the inlet port 1340 may be formed at a left upper side of the liquid container 1310. The atomized liquid discharged to the plant arrangement unit 1200 through the discharge port 1330 may be sucked into the inlet port 1340 and move into the liquid container 1310.

Meanwhile, an inlet port switching unit may be separately provided to correspond to the inlet port 1340. Therefore, the control unit 1100 may control the inlet port switching unit and adjust the time for which the liquid is sucked into the liquid container 1310 through the inlet port 1340 and the amount of liquid to be sucked into the liquid container 1310 through the inlet port 1340.

The circulation device 1350 may be provided at the upper side of the liquid container 1310 and correspond to the inlet port 1340. The circulation device 1350 may circulate the atomized liquid. Specifically, the circulation device 1350 may be provided at the left upper side of the liquid container 1310 and correspond to the inlet port 1340. The circulation device 1350 may operate so that the atomized liquid discharged to the plant arrangement unit 1200 is sucked through the inlet port 1340. That is, the control unit 1100 may control the circulation device 1350 so that the atomized liquid discharged to the plant arrangement unit 1200 is sucked through the inlet port 1340. Therefore, the control unit 1100 may control the time for which the circulation device 1350 operates and control the number of times the circulation device 1350 operates, thereby smoothly sucking the atomized liquid discharged to the plant arrangement unit 1200. The atomized liquid, which is discharged to the plant arrangement unit 1200 and sucked by the circulation device 1350, may be mixed with the liquid 20 accommodated in the liquid container 1310.

The liquid supply tube connection part 1360 may be connected to a liquid supply tube 1420 of the liquid supply unit 1400 to be described below. The liquid supply tube connection part 1360 may be supplied with the liquid stored in a liquid storage unit 1410 of the liquid supply unit 1400 through the liquid supply tube 1420.

The first drain tube connection part 1370 may be connected to a first drain tube 1430 of the liquid supply unit 1400 to be described below. When the amount of liquid 20 accommodated in the liquid container 1310 is larger than the preset reference amount of liquid, the first drain tube connection part 1370 may transmit the liquid 20 to the liquid storage unit 1410 through the first drain tube 1430 by the amount of liquid that exceeds the reference amount of liquid.

Referring back to FIGS. 2 to 4, the liquid supply unit 1400 may be connected to the moisture supply unit 1300 and supply the liquid 20 to the moisture supply unit 1300. Further, the liquid supply unit 1400 may be positioned at a lower portion of the entire cabinet.

Specifically, the liquid supply unit 1400 may include the liquid storage unit 1410, the liquid supply tube 1420, the first drain tube 1430, a second drain tube 1440, a level sensor module 1450, and a dissolved oxygen measurement sensor module 1460. However, the constituent elements are not essential to implement the liquid supply unit 1400. The liquid supply unit 1400 may have the constituent elements larger or smaller in number than the constituent elements listed above.

The liquid storage unit 1410 may be provided in the form of a container having an accommodation space therein and include a pump configured to provide power for supplying the liquid 20 to the moisture supply unit 1300. However, the shape of the liquid storage unit 1410 is not limited thereto, and the liquid storage unit 1410 may be formed in various shapes, as necessary. The pump may be provided on a lower surface of the liquid storage unit 1410 and supply the liquid 20 to the moisture supply unit 1300 through the liquid supply tube 1420.

The liquid supply tube 1420 is provided in the form of a hollow tube. One side of the liquid supply tube 1420 is connected to the liquid storage unit 1410, and the other side of the liquid supply tube 1420 is connected to the moisture supply unit 1300, such that the liquid 20 stored in the liquid storage unit 1410 may move to the moisture supply unit 1300. Specifically, one side of the liquid supply tube 1420 is in contact with the liquid 20 stored in the liquid storage unit 1410, such that the liquid 20 may be moved by the pump of the liquid storage unit 1410.

According to the several embodiments of the present disclosure, the liquid supply tube 1420 may include a valve connected to the at least one moisture supply unit 1300 and configured to selectively supply the liquid 20 to the plurality of moisture supply units 1300. Therefore, the control unit 1100 may selectively supply the liquid 20 to the at least one moisture supply unit 1300 by controlling the valve of the liquid supply tube 1420. Therefore, the control unit 1100 may smoothly grow the different types of plants 10 by controlling the amount of liquid and the time for which the liquid is supplied so that the amount of liquid and the time for which the liquid is supplied are varied depending on the type of plant 10 disposed on the plant arrangement unit 1200.

The first drain tube 1430 is provided in the form of a hollow tube. One side of the first drain tube 1430 is connected to the moisture supply unit 1300, and the other side of the first drain tube 1430 is connected to the liquid storage unit 1410, such that the liquid accommodated in the moisture supply unit 1300 may move to the liquid storage unit 1410. Specifically, one side of the first drain tube 1430 may be connected to a preset position of the moisture supply unit 1300. The preset position may be a position set so that at least a part of the liquid accommodated in the moisture supply unit moves to the liquid storage unit 1410 when the amount of liquid accommodated in the moisture supply unit 1300 exceeds the reference amount of liquid. For example, one side of the first drain tube 1430 may be connected to the first drain tube connection part 1370 provided at a preset position.

The second drain tube 1440 is provided in the form of a hollow tube. One side of the second drain tube 1440 is connected to the plant arrangement unit 1200, and the other side of the second drain tube 1440 is connected to the liquid storage unit 1410, such that the liquid existing on the bottom of the plant arrangement unit 1200 may move to the liquid storage unit 1400. According to the several embodiments of the present disclosure, the bottom of the plant arrangement unit 1200 may be inclined so that the liquid existing on the bottom of the plant arrangement unit 1200 may smoothly move to the second drain tube 1440. Specifically, the bottom of the plant arrangement unit 1200 may be gradually inclined downward at a predetermined angle in a direction in which the second drain tube 1440 exists.

The liquid storage unit 1410 includes the level sensor module 1450. The level sensor module 1450 may be provided in the liquid storage unit 1410 and detect a level of the liquid 20 stored in the liquid storage unit 1410. Therefore, when the level is detected by the level sensor module 1450, the control unit 1100 may determine whether to transmit a danger signal to the external device 200 based on the level. Specifically, when the control unit 1100 recognizes that the level is a preset height (e.g., 50 cm) or less, the control unit 1100 may transmit a danger signal including information on the level to the external device 2000 through the network unit 1700.

The liquid storage unit 1410 may include the dissolved oxygen measurement sensor module 1460. The dissolved oxygen measurement sensor module 1460 may be provided in the liquid storage unit 1410 and measure the amount of dissolved oxygen in the liquid 20 stored in the liquid storage unit 1410. In this case, the control unit 1100 may recognize information on the amount of dissolved oxygen measured by the dissolved oxygen measurement sensor module 1460.

The oxygen supply unit 1500 may be connected to the liquid supply unit 1400 and supply oxygen to the liquid supply unit 1400. In this case, when the amount of dissolved oxygen is measured by the dissolved oxygen measurement sensor module 1460, the control unit 1100 may determine whether to supply oxygen through the oxygen supply unit 1500 based on the amount of dissolved oxygen. Specifically, when the control unit 1100 recognizes that the amount of dissolved oxygen measured by the dissolved oxygen measurement sensor module 1460 is equal to or smaller than a reference amount of dissolved oxygen, the control unit 1100 may perform control to allow the oxygen supply unit 1500 to supply oxygen to the liquid supply unit 1400. According to the several embodiments of the present disclosure, the control unit 1100 may perform control to allow the oxygen supply unit 1500 to supply oxygen to the liquid supply unit 1400 for each preset time.

The lighting unit 1600 may include at least one light configured to emit light toward the plant. Specifically, the lighting unit 1600 may be positioned above the plant arrangement unit 1200. The at least one light may be controlled by the control unit 1100.

Referring back to FIG. 1, the network unit 1700 may include any type of wired/wireless communication network configured to be controlled by the control unit and transmit or receive any type of data and signals. For example, the network unit 1700 may transmit a danger signal, which is generated by the control unit 1100, to the external device 2000. Further, the network unit 1700 may receive a control signal from the external device 2000.

The external device 2000 may mean any type of device in a system having a mechanism configured to communicate with the plant cultivation apparatus 1000. Examples of the external device 2000 may include a personal computer (PC), a notebook, and a tablet PC. However, the external device 2000 is not limited thereto.

The external device 2000 may receive the danger signal from the plant cultivation apparatus 1000. Therefore, a user may identify a state of the plant cultivation apparatus 1000 through the external device 2000. In addition, the external device 2000 may transmit a control signal, which is generated in response to the user's input, to the plant cultivation apparatus 1000.

Therefore, the control unit 1100 of the plant cultivation apparatus 1000 may control the constituent elements of the plant cultivation apparatus 1000 based on the control signal received from the external device 2000. For example, when the received control signal includes information on the number of times the liquid is sprayed, the control unit 1100 may control the moisture supply unit 1300 and the liquid supply unit 1400 so that the liquid is sprayed a number of times corresponding to information on the number of times the liquid is sprayed. However, the present disclosure is not limited thereto. The control unit 1100 may perform an operation in response to the received control signal by controlling the constituent elements of the plant cultivation apparatus 1000.

The network may include any wired/wireless communication network through which the plant cultivation apparatus 1000 and the external device 2000 may transmit and receive any type of data and signals.

As described above, the plant cultivation apparatus 1000 according to the several embodiments of the present disclosure may minimize the use of the liquid by using the vibrator, thereby reducing costs required to manage the plant cultivation.

The plant cultivation apparatus 1000 provides a constant growth/development environmental condition for all the crops, thereby expecting predetermined weights and quality of the final harvests.

The plant cultivation apparatus 1000 may not only continuously supply nutrients to the space in the plant arrangement unit 1200, i.e., the root of the plant 10 exposed to the air, but also supply a sufficient amount of oxygen, thereby significantly improving productivity by minimizing the period of growth and development by facilitating the growth and development.

The plant cultivation apparatus 1000 may improve technology competitiveness by using the moisture supply unit 1300 according to the several embodiments of the present disclosure different from a spray method using a spray nozzle, that is, a hydroponic cultivation method in the related art.

The plant cultivation apparatus 1000 may help move the agrifood industry to the sixth industry by fusing and combining technologies such as BT, ET, IT, and NT and create new jobs by increasing the demand for workers in related industries.

The description of the presented exemplary embodiments is provided to enable any person skilled in the art of the present disclosure to carry out or use the present disclosure. Various modifications to the exemplary embodiments will be apparent to those skilled in the art of the present disclosure, and the generic principles defined herein may be applied to other exemplary embodiments without departing from the scope of the present disclosure. Accordingly, it should be understood that the present disclosure is not limited to the exemplary embodiments presented herein but should be construed in the broadest scope consistent with the principles and novel features presented herein.

## Claims

1. A plant cultivation apparatus comprising:
a plant arrangement unit on which a plant is disposed;
a moisture supply unit connected to the plant arrangement unit and configured to spray a liquid to the plant; and
a liquid supply unit connected to the moisture supply unit and configured to supply the liquid to the moisture supply unit.

2. The plant cultivation apparatus of claim 1, wherein the moisture supply unit comprises:
a liquid container connected to the liquid supply unit and configured to accommodate the amount of liquid equal to or smaller than a reference amount of liquid;
a vibrator provided at a lower side of the liquid container and configured to atomize the liquid by applying vibration to the liquid;
a discharge port formed at an upper side of the liquid container and configured to discharge the atomized liquid to the plant arrangement unit;
an inlet port formed at the upper side of the liquid container and configured to suck the atomized liquid discharged to the plant arrangement unit through the discharge port; and
a circulation device provided at the upper side of the liquid container so as to correspond to the inlet port and configured to circulate the atomized liquid.

3. The plant cultivation apparatus of claim 1, wherein the liquid supply unit comprises:
a liquid storage unit configured to store the liquid and including a pump configured to provide power for supplying the liquid to the moisture supply unit;
a liquid supply tube provided in the form of a hollow tube which one side is connected to the liquid storage unit, and the other side connected to the moisture supply unit, such that the liquid stored in the liquid storage unit moves to the moisture supply unit;
a first drain tube provided in the form of a hollow tube which one side is connected to the moisture supply unit, and the other side is connected to the liquid storage unit, such that the liquid accommodated in the moisture supply unit moves to the liquid storage unit; and
a second drain tube provided in the form of a hollow tube which one side is connected to the plant arrangement unit, and the other side is connected to the liquid storage unit, such that the liquid condensed in the plant arrangement unit moves to the liquid storage unit.

4. The plant cultivation apparatus of claim 3, wherein one side of the first drain tube is connected to a preset position in the moisture supply unit, and
wherein the preset position is a position set so that at least a part of the liquid accommodated in the moisture supply unit moves to the liquid storage unit when the amount of liquid accommodated in the moisture supply unit exceeds a reference amount of liquid.

5. The plant cultivation apparatus of claim 3, wherein the liquid storage unit comprises a level sensor module configured to detect a level of the stored liquid, and
wherein the plant cultivation apparatus further comprises a control unit configured to determine whether to transmit a danger signal to an external device based on the level when the level is detected by the level sensor module.

6. The plant cultivation apparatus of claim 5, further comprising:
a network unit configured to be controlled by the control unit, and
wherein the control unit transmits the danger signal including information on the level to the external device through the network unit when the control unit recognizes that the level is equal to or lower than a preset height.

7. The plant cultivation apparatus of claim 3, wherein the liquid storage unit comprises a dissolved oxygen measurement sensor module configured to measure the amount of dissolved oxygen in the stored liquid.

8. The plant cultivation apparatus of claim 7, wherein the plant cultivation apparatus further comprises:
an oxygen supply unit connected to the liquid supply unit and configured to supply oxygen to the liquid supply unit; and
a control unit configured to determine whether to supply the oxygen through the oxygen supply unit based on the amount of dissolved oxygen when the amount of dissolved oxygen is measured by the dissolved oxygen measurement sensor module.

9. The plant cultivation apparatus of claim 8, wherein the control unit controls the oxygen supply unit to supply the oxygen when the control unit recognizes that the amount of dissolved oxygen is equal to or smaller than a reference amount of dissolved oxygen.

10. The plant cultivation apparatus of claim 1, further comprising:
a lighting unit including at least one light configured to emit light toward the plant; and
a control unit configured to control at least one of a light emission angle and intensity of light of the at least one light based on an arrangement of the plant.
